# EUROPÄISCHE PATENTSCHRIFT

(11) **EP 2 939 962 B1**
(45) Veröffentlichungstag und Bekanntmachung des Hinweises auf die Patenterteilung: **11.04.2018**
(21) Anmeldenummer: 15156478.8
(22) Anmeldetag: 25.02.2015
(51) Int. Cl.: B65G 57/00, B65G 57/28

(54) **VERFAHREN FÜR DAS STAPELN VON GEFÜLLTEN SÄCKEN ZU EINEM PALETTENFREIEN SACKSTAPEL**
METHOD FOR STACKING FILLED BAGS TO FORM A PALLET-FREE STACK OF BAGS
PROCÉDÉ DESTINÉ À EMPILER DES SACS PLEINS SANS PALETTE

(30) Priorität: 28.04.2014 DE 102014105936
(43) Veröffentlichungstag der Anmeldung: 04.11.2015
(73) Patentinhaber: Windmöller & Hölscher KG, 49525 Lengerich (DE)
(72) Erfinder: Köhn, Uwe, 49078 Osnabrück (DE); Imberg, Rafael, 49477 Ibbenbüren (DE); Kölker, Martin, 49477 Ibbenbüren (DE); Große-Heitmeyer, Rüdiger, 49492 Westerkappeln (DE); Schrödter, Andreas, 49549 Ladbergen (DE); Hawighorst, Thomas, 49205 Hasbergen (DE)

(56) Entgegenhaltungen:
- EP-A1- 1 281 629
- EP-A1- 2 036 818
- WO-A1-00/71448
- DE-A1- 3 832 557
- DE-A1- 3 834 535
- DE-A1- 3 941 139
- GB-A- 2 185 461

## Beschreibung

Die vorliegende Erfindung betrifft ein Verfahren zum Stapeln von gefüllten Säcken zu einem palettenfreien Sackstapel sowie einen durch ein entsprechendes Verfahren hergestellten Sackstapel.

Es ist bekannt, dass für die Lagerung und den Transport von gefüllten Säcken diese zu Sackstapeln aufgestapelt werden sollen. Hierfür werden die Säcke in unterschiedlichen Reihen zu einzelnen Lagen zusammengeführt, wobei diese einzelnen Lagen aufeinandergestapelt werden, um den Sackstapel auszubilden. Häufig wird ein solcher Sackstapel auf einer Palette angeordnet, um den Transport mit einem Transporthilfsmittel, z. B. mit einem Gabelstapler, leicht und einfach durchführen zu können. Auch ist es grundsätzlich bekannt, dass auf Paletten verzichtet werden kann, wenn der Stapel an sich eine ausreichende Stabilität aufweist. Insbesondere ist dies der Fall, wenn gefüllte Säcke aufgestapelt werden, wobei in der untersten Lage zumindest zwei Anhebe-Aussparungen für ein Anheben mit einem Gabelstapler ausgebildet werden. Damit greifen die Zinken des Gabelstaplers sozusagen zwischen die gefüllten Säcke der unteren Lage, so dass auf eine Palette verzichtet werden kann.

Nachteilhaft bei den bekannten Lösungen ist es, dass bei der Verwendung einer Palette dementsprechend Stauraum für gefüllte Säcke verloren geht. Wird auf eine Palette nach den bekannten Lösungen verzichtet, so kann dies nur dann erfolgen, wenn die gefüllten Säcke und damit insbesondere auch das Füllgut innerhalb der Säcke, eine ausreichende mechanische Stabilität aufweist, um auf eine Palettenstabilisierung zu verzichten. Dies ist jedoch nicht grundsätzlich der Fall, so dass diese Lösung nur in Sonderfällen eingesetzt werden kann. Bei den meisten Stapelmöglichkeiten von gefüllten Säcken muss daher auf die bekannte Lösung unter Verwendung einer Palette mit den entsprechenden Nachteilen zurückgegriffen werden. Neben dem Platzbedarf führt die Palette auch zu zusätzlichen Kosten und kann durch mögliche Beschädigungen einer üblicherweise aus Holz gefertigten Palette, auch zu Bruchrisiken und damit zu Verletzungsgefahr im Handling der Paletten führen. Weiterhin offenbart die Schrift DE 38 34 535 A1 ein Verfahren für das Stapeln von Säcken und einen Sackstapel, gemäß dem Oberbegriff der Ansprüche 1 und 11. Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise möglichst viele unterschiedliche Sackformen und vor allem Füllmaterialien der gefüllten Säcke für ein palettenfreies Sackstapeln zu ermöglichen. Voranstehende Aufgabe wird gelöst durch ein Verfahren mit den Merkmalen des Anspruchs 1 sowie einen Sackstapel mit den Merkmalen des Anspruchs 11. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Sackstapel und jeweils umgekehrt, so dass bezüglich der Offenbarung zu den einzelnen Erfindungsaspekten stets wechselseitig Bezug genommen wird bzw. werden kann.

Erfindungsgemäß dient das Verfahren zum Stapeln von gefüllten Säcken zu einem palettenfreien Sackstapel. Hierfür weist das erfindungsgemäße Verfahren die folgenden Schritte auf:
- Ausbilden einer ersten Lage aus zumindest zwei Reihen von gefüllten Säcken,
- Ausbilden wenigstens einer weiteren Lage aus zumindest zwei Reihen von gefüllten Säcken auf der ersten Lage,
- Umhüllen des fertigen Sackstapels mit zumindest einer stabilisierenden Umhüllung.

Bei den voranstehenden Schritten ist entscheidend, dass die erste Lage oder die letzte Lage des Sackstapels mit zumindest zwei Anhebe-Aussparungen für ein Anheben mit einem Gabelstapler ausgebildet wird. Dabei wird zwischen zwei Lagen ein mechanisch versteifender Zwischenboden eingebracht mit einer Bodenfläche, die sich zwischen den beiden benachbarten Lagen erstreckt, und zumindest einer Seitenlasche, welche sich entlang der Seitenflächen der Säcke einer der beiden benachbarten Lagen und quer zu den Anhebe-Aussparungen erstreckt.

Ein erfindungsgemäßes Verfahren dient demnach zum Stapeln von gefüllten Säcken, um einen palettenfreien Sackstapel zu erreichen. Dieses palettenfreie Stapeln soll insbesondere unabhängig vom Füllgut und/oder dem Material der gefüllten Säcke möglich werden. Dies wird dadurch erzielt, dass zum einen eine stabilisierende Umhüllung für den fertigen Sackstapel eingesetzt wird. Unter einer stabilisierenden Umhüllung ist dabei insbesondere eine Folienumhüllung zu verstehen, welche eine Umhüllungskraft auf den fertigen Sackstapel einbringen kann. Eine solche Folienumhüllung kann z. B. gewickelt oder geschrumpft werden, um den fertigen Sackstapel von der Seite, sowie von oben und unten zusammenzuhalten. Die stabilisierende Umhüllung kann dabei einteilig oder mehrteilig ausgebildet werden, so dass insbesondere von unterschiedlichen Seiten bzw. mit unterschiedlichen Wickelrichtungen bei einer Schrumpffolie, die gewünschte stabilisierende Wirkung mit der Umhüllung erzielbar wird.

Unter Anhebe-Aussparungen sind im Sinne der vorliegenden Erfindung Aussparungen zu verstehen, in welche zumindest abschnittsweise die Zinken eines Gabelstaplers eingreifen können. Da ein Gabelstapler üblicherweise mit sich in einer Längsrichtung erstreckenden Gabelzinken ausgebildet ist, sind dementsprechend erfindungsgemäß die beiden Anhebe-Aussparungen ebenfalls mit einem länglichen freien Querschnitt versehen, in welche diese Gabelzinken eingreifen können. Sind beispielsweise die gefüllten Säcke in den einzelnen Lagen auf ihrer Breitseite aufgelegt, so kann zwischen den einzelnen Seitenflächen eine Aussparung vorgesehen werden, die sich zumindest quer durch einen Teil des fertigen Sackstapels erstreckt. Damit werden die erfindungsgemäßen Anhebe-Aussparungen ausgebildet.

Um nun beim Anheben des fertigen palettenfreien Sackstapels mit dem Gabelstapler eine möglichst hohe mechanische Stabilität zu erzielen, ist erfindungsgemäß der mechanisch versteifende Zwischenboden zur Verfügung gestellt. Dieser dient insbesondere dazu, ein Durchhängen zwischen den einzelnen Gabelzinken und den dort angeordneten gefüllten Säcken zu vermeiden oder zumindest zu reduzieren. Dafür ist der mechanisch versteifende Zwischenboden aus einem Material ausgebildet, welches möglichst kostengünstig zur Verfügung gestellt wird. Für die mechanisch versteifende Wirkung ist nämlich hauptsächlich nicht das Material, sondern vielmehr die Korrelation aus der Bodenfläche und der Seitenlasche entscheidend.

Die Bodenfläche des Zwischenbodens erstreckt sich dabei zwischen den beiden benachbarten Lagen. Dabei kann es bevorzugt sein, wenn die ganze oder die im Wesentlichen ganze entsprechende Lage mit einer solchen Bodenfläche abgedeckt ist. Jedoch kann es auch ausreichen, wenn nur ein Teilabschnitt dieses Bereichs zwischen zwei benachbarten Lagen von der Bodenfläche abgedeckt wird. Die Seitenlasche ist sozusagen abgeknickt von der Bodenlasche, insbesondere um einen Abknickwinkel von ca. 90°. Auf diese Weise erstreckt sich die Seitenlasche entlang der Knicklinie ebenfalls entlang der Seitenflächen der Säcke einer der beiden benachbarten Lagen.

Sindbspw. die Anhebe-Aussparungen in der untersten Lage angeordnet, und ist die Bodenfläche des mechanisch versteifenden Zwischenbodens zwischen der untersten Lage und der zweituntersten Lage vorgesehen, so kann diese Seitenlasche sich sowohl nach unten als auch nach oben erstrecken. Bevorzugt ist es, wenn die Seitenlasche sich entlang der Seitenflächen der Säcke der zweituntersten Lage erstreckt, so dass die Anhebe-Aussparungen auf diese Weise automatisch unabhängig von der geometrischen Erstreckung der Seitenlasche komplett freibleiben.

Wird nun mit einem Gabelstapler ein erfindungsgemäß hergestellter palettenfreier Sackstapel angehoben, so führt die Gewichtskraft der gefüllten Säcke zu einer Krafteinwirkung nach unten. Während bei bekannten palettenfreien Sackstapeln dies zu einem Durchhängen bzw. Durchbiegen zwischen den Zinken des Gabelstaplers geführt hatte, führt hier die Korrelation zwischen Bodenfläche und Seitenfläche, insbesondere durch die Knickkante zwischen diesen beiden Elementen des Zwischenbodens, zu einer deutlichen Stabilisierung. Die Gewichtskraft stützt sich demnach über die Seitenlasche bzw. die Knickkante und die Bodenfläche zur Seite hin ab und kann dementsprechend besser in die Gabelzinken des Gabelstaplers eingeleitet werden. Ein Durchhängen bzw. Durchbiegen zwischen den Gabelzinken des Gabelstaplers und damit zwischen den Anhebe-Aussparungen wird deutlich reduziert bzw. sogar vollständig vermieden.

Unter einer Lage ist im Sinne der vorliegenden Erfindung insbesondere eine Ausbildung einer bestimmten Anordnungsform einer Mehrzahl von Säcken zu verstehen. Dabei ist es bevorzugt, wenn sich die Ausbildungsform bzw. die Lagebilder der einzelnen Lagen voneinander unterscheiden, um die mechanische Stabilität des Sackstapels auf diese Weise weiter zu erhöhen.

Ein erfindungsgemäßes Verfahren wird insbesondere mit einer Palettiervorrichtung durchgeführt. Eine solche Palettiervorrichtung dient also dazu, üblicherweise gefüllte Säcke auf einer Palette anzuordnen. Jedoch kann durch einfaches Weglassen der Palette mit einer solchen Vorrichtung auch ein erfindungsgemäßes Verfahren durchgeführt werden. So wird auf einer entsprechenden Hubvorrichtung einfach direkt die erste Lage aus zumindest zwei Reihen von gefüllten Säcken ausgebildet. Hierfür wird üblicherweise in einer Schiebevorrichtung ein Lagebild auf einer Schiebefläche erzeugt, welches anschließend mithilfe eines Schiebers auf einen benachbarten Schiebetisch geschoben wird. Dieser Schiebetisch kann sich öffnen, so dass die fertiggestellte Lage auf die sich darunter befindliche Palette bzw. bei einem erfindungsgemäßen Verfahren direkt auf die darunter angeordnete Hubvorrichtung abgelassen werden kann. Anschließend bewegt sich die Hubvorrichtung um die Breite der gefüllten Säcke bzw. die Dicke der Lage nach unten, so dass sich der Schiebetisch wieder schließen kann. Dieses Vorgehen wird so häufig wiederholt, bis sämtliche Lagen und damit die gewünschte Stapelhöhe des Sackstapels erzielt worden ist. Um ein erfindungsgemäßes Verfahren durchzuführen, kann dabei der mechanisch versteifende Zwischenboden z. B. direkt mittels der Schiebevorrichtung und den sich öffnenden Schiebetisch ebenfalls zwischen zwei Lagen eingebracht werden. Jedoch ist es auch denkbar, dass in manueller Weise oder durch eine seitliche Zufuhrvorrichtung ein entsprechender Zwischenboden eingebracht wird, bevor die nachfolgende Lage von oben auf die Bodenfläche des Zwischenbodens aufgesetzt wird.

Erfindungsgemäß kann der Zwischenboden bereits eine Faltung aufweisen, welche die Knicklinie zwischen der Bodenfläche einerseits und der Seitenlasche andererseits vorgibt. Jedoch ist es auch denkbar, dass der mechanisch schweifende Zwischenboden als einfache und ebene Erstreckung vorgesehen wird, so dass erst durch das Umhüllen des fertigen Sackstapels mit der zumindest einen stabilisierenden Umhüllung automatisch ein Teil des Zwischenbodens umgeklappt wird durch die Einwirkung der bereits beschriebenen Umhüllungskraft. Damit gibt sich die Knicklinie zwischen der Seitenlasche und der Bodenfläche sozusagen automatisch durch diese Umhüllung aus.

Es ist noch darauf hinzuweisen, dass sowohl in der ersten Lage, als auch in der letzten Lage des Sackstapels entsprechende Anhebe-Aussparungen ausgebildet werden können. Werden sie in der ersten und damit während des Stapelvorgangs untersten Lage ausgebildet, so kann direkt nachfolgend der Weitertransport erfolgen. Wird in der obersten und damit letzten Lage die jeweilige Anhebe-Aussparung ausgebildet, so kann durch ein komplettes Umdrehen bzw. Umsetzen des fertigen Sackstapels nach dem Umhüllungsschritt ein Ausbilden dieser obersten Lage zur untersten Lage erfolgen. Beide Varianten sind im Sinne der vorliegenden Erfindung mit den gleichen Vorteilen belegbar.

Es kann von Vorteil sein, wenn bei einem erfindungsgemäßen Verfahren die Anhebe-Aussparungen in der letzten Lage des Sackstapels ausgebildet werden und anschließend an den Schritt des Umhüllens der umhüllte Sackstapel umgedreht wird, so dass die letzte Lage die unterste Lage des Sackstapels ausbildet. Dies führt zwar zu einem zusätzlichen Verfahrensschritt, jedoch während der Durchführung des Stapelvorgangs zu höherer Stabilität. So kann während des Stapelns die erste Lage komplett gefüllt ausgebildet werden, so dass die möglicherweise sonst destabilisierend wirkenden Anhebe-Aussparungen keinerlei Einfluss auf darüber gestapelte Lagen ausbilden können. Für das Umdrehen kann ein entsprechender Rotationsgreifer vorgesehen werden, welcher nach dem Schritt des Umhüllens einen zwischenstabilisierten Sackstapel mit dementsprechend ausreichender Stabilität greifen und umdrehen kann. Während des Umdrehens hält dementsprechend sowohl die Umhüllung als auch die Stabilisierungswirkung des Zwischenbodens den fertigen Sackstapel in seiner gewünschten Form.

Ein weiterer Vorteil ist erzielbar, wenn bei einem erfindungsgemäßen Verfahren der Zwischenboden zwischen der Lage, in welcher die Anhebe-Aussparungen ausgebildet werden, und der benachbarten Lage eingebracht wird. Mit anderen Worten wird auf diese Weise der Abstand zwischen dem Zwischenboden und den Anhebe-Aussparungen minimiert. Während die erfindungsgemäß beschriebene Versteifungswirkung durch die Kompaktheit des gesamten Sackstapels mithilfe der Umhüllung auch für jede Anordnung des Zwischenbodens vorteilhaft ist, wird durch die direkte Nähe zwischen dem Zwischenboden und den Anhebe-Aussparungen diese vorteilhafte Funktion noch weiter verbessert. Die Versteifungswirkung mithilfe des Zwischenbodens wirkt in direkter Nähe der Anhebe-Aussparungen noch direkter, so dass dementsprechend das Durchhängen bzw. Durchbiegen der untersten Lage zwischen den Anhebe-Aussparungen noch wirkungsvoller vermieden werden kann. Insbesondere kann der Zwischenboden dann beim Ausbilden dieser ersten Lage bzw. der vorletzten Lage direkt eingebracht werden, wie dies bereits mehrfach erläutert worden ist.

Vorteilhaft ist es ebenfalls, wenn bei einem erfindungsgemäßen Verfahren der Zwischenboden zwei Seitenlaschen aufweist, welche sich entlang der Seitenflächen der Säcke auf unterschiedlichen Seiten des Sackstapels quer zu den Anhebe-Aussparungen erstrecken. Mit anderen Worten ist der Zwischenboden nun mit einer Bodenfläche und zwei Seitenlaschen ausgestaltet, die auf unterschiedlichen Seiten des Sackstapels umgeklappt sind. Somit bilden sich auch zwei Knicklinien aus, die insbesondere bei einem quaderförmigen Sackstapel parallel oder im Wesentlichen parallel zueinander verlaufen. Damit verlaufen die beiden Knicklinien auch senkrecht oder im Wesentlichen senkrecht zur jeweiligen Anhebe-Aussparung. Die beschriebene Versteifungswirkung wird durch die doppelte Seitenlasche und damit die doppelte Ausbildung der entsprechenden Knicklinien weiter verbessert und insbesondere sogar verdoppelt. Mit Bezug auf die Fahrtrichtung eines Gabelstaplers ist somit die Versteifungsknicklinie durch die beiden Seitenlaschen sowohl auf der Vorderseite als auch auf der Rückseite des Sackstapels angeordnet.

Ein weiterer Vorteil ist es, wenn bei einem erfindungsgemäßen Verfahren die zumindest eine Seitenlasche eine Breite aufweist, welche der Breite der Seitenfläche eines gefüllten Sacks entspricht oder im Wesentlichen entspricht. Die Seitenlasche ist dementsprechend ausreichend groß dimensioniert, dass sich zwischen der Oberfläche der Seitenlasche und der Oberfläche der Seitenfläche des gefüllten Sacks eine Reibung ausbildet, welche insbesondere durch das Einwirken der Umhüllungskraft verstärkt wird. Damit wird vermieden, dass durch mechanische Einwirkung auf den Sackstapel die Seitenlasche in unerwünschter Weise entlang der Bodenfläche zwischen die beiden Lagen eingezogen wird. Ein solcher Fall ist zu vermeiden, da ansonsten die beschriebene Stabilisierungswirkung reduziert oder sogar vollständig aufgehoben werden würde. Das Ausbilden in dieser Breite führt weiter dazu, dass auf dieser Seitenlasche auch ein Aufdruck angeordnet werden kann, welcher Informationen hinsichtlich des Zwischenbodens und/oder der gefüllten Säcke angibt. Insbesondere in Kombination mit durchsichtigen Umhüllungen führt dies zu einer weiteren Reduktion im Transportaufwand bzw. im Handlingsaufwand.

Ein weiterer Vorteil ist es, wenn bei einem erfindungsgemäßen Verfahren die zumindest eine Seitenlasche sich entlang der Seitenfläche der Säcke und von den Anhebe-Aussparungen weg erstreckt. Das bedeutet, dass in Anhebeposition sich die Seitenlasche sozusagen nach oben erstreckt. Damit ist unabhängig von der geometrischen Erstreckung und damit der Größe der Seitenlasche die jeweilige Anhebe-Aussparung immer frei. Auf diese Weise kann die Seitenlasche besonders großflächig ausgebildet werden, und sich insbesondere sowohl über die gesamte Breite der Seitenflächen eines gefüllten Sacks, als auch über die gesamte Länge der entsprechenden Lage erstrecken. In gleicher Weise wird sozusagen die maximale Versteifungswirkung erzielt, ohne ein Anheben über die Anhebe-Aussparungen zu beeinträchtigen. Bei einem erfindungsgemäßen Verfahren aufweist der Zwischenboden wenigstens eines der folgenden Materialien:
- Papier,
- Pappe,
- Karton
und/oder besteht wenigstens abschnittsweise aus einem der folgenden Materialien und Kunststoff :
- Papier
- Pappe
- Karton

Bei der voranstehenden Aufzählung handelt es sich um eine nicht abschließende Liste. Dementsprechend können auch Kombinationen der unterschiedlichen Materialien oder mit anderen Materialien denkbar sein. So kann bspw. eine oberste Papierschicht mit einer untersten Papierschicht über eine Wellkartonschicht verbunden sein, um dementsprechend verstärkende Strukturen, z. B. in Form von Waben oder Dreiecken, zur Verfügung stellen zu können. Selbstverständlich können Materialmischungen auch über geometrisch unterschiedliche Abschnitte des Zwischenbodens vorliegen. Insbesondere die bereits mehrfach beschriebene Kante bzw. Knickkante zwischen der Seitenlasche und der Bodenfläche kann dabei eine entsprechende Materialauswahl aufweisen, um gerade diese Knickfunktionalität zu verbessern.

Ein weiterer Vorteil ist es, wenn bei einem erfindungsgemäßen Verfahren mit zumindest zwei Umhüllungen, insbesondere von unterschiedlichen Seiten, der fertige Sackstapel umhüllt wird. Eine solche Umhüllung kann z. B. von oben aufgesetzt werden und dementsprechend über ein Aufschrumpfen eine erste Umhüllungskraft aufbringen. Anschließend kann der fertige Sackstapel gedreht werden, so dass nunmehr nochmals von oben und damit von der anderen Seite des Sackstapels eine zweite Umhüllung die gesamte Umhüllungsstruktur zur Verfügung stellt. Auch die Verwendung einer sogenannten Stretchfolie ist denkbar, so dass ein sogenanntes seitliches Umwickeln möglich wird. Dies macht deutlich, dass die Umhüllung in unterschiedlichster Weise ausgestaltet sein kann, um in Kombination mit dem mechanisch versteifenden Zwischenboden die erfindungsgemäße Funktionalität gewährleisten zu können.

Vorteilhaft ist es ebenfalls, wenn bei einem erfindungsgemäßen Verfahren wenigstens zwei Zwischenböden, insbesondere mit gleicher oder im Wesentlichen gleicher Ausgestaltung, zwischen jeweils zwei unterschiedlichen Lagen des Sackstapels eingebracht werden. Dies führt dazu, dass eine noch weiter verbesserte mechanische Stabilisierung möglich wird. Jeder der Zwischenböden weist dabei vorzugsweise eine gleiche oder eine im Wesentlichen gleiche Ausgestaltung auf, insbesondere hinsichtlich der Anordnung, Ausbildung und Ausrichtung der Bodenflächen und der Seitenlaschen. Dies führt auch bei nicht benachbarten Zwischenräumen zu einer Verstärkung der Stabilisationsfunktion.

Auch vorteilhaft ist es, wenn bei einem erfindungsgemäßen Verfahren das Einbringen des Zwischenbodens zwischen zwei Schritten der Ausbildung der beiden benachbarten Lagen der Säcke erfolgt. So kann der Zwischenboden sozusagen während des Stapelns wie eine eigene Lage behandelt und eingebracht werden. Insbesondere erfolgt dies mithilfe einer Palettiervorrichtung bzw. einer darin angeordneten entsprechenden Schiebevorrichtung, wie dies bereits erläutert worden ist. Auch ein Einschieben während der Ausbildung der Lagen von der Seite ist dabei im Sinne der vorliegenden Erfindung denkbar.

Ebenfalls Gegenstand der vorliegenden Erfindung ist ein Sackstapel, aufweisend zumindest zwei Lagen mit jeweils wenigstens zwei Reihen gefüllter Säcke, wobei die unterste Lage zumindest zwei Anhebe-Aussparungen für ein Anheben mit einem Gabelstapler aufweist. Zwischen zwei Lagen ist ein mechanisch versteifender Zwischenboden angeordnet mit einer Bodenfläche, die sich zwischen den beiden benachbarten Lagen erstreckt, und zumindest einer Seitenlasche, welche sich entlang der Seitenflächen der Säcke einer der beiden benachbarten Lagen und quer zu den Anhebe-Aussparungen erstreckt. Insbesondere wird ein erfindungsgemäßer Sackstapel mit einem erfindungsgemäßen Verfahren hergestellt. Damit bringt ein erfindungsgemäßer Sackstapel die gleichen Vorteile mit sich, wie sie ausführlich mit Bezug auf ein erfindungsgemäßes Verfahren erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: ein erster Verfahrensschritt eines erfindungsgemäßen Verfahrens,
- Fig. 2: ein weiterer Verfahrensschritt eines erfindungsgemäßen Verfahrens,
- Fig. 3: das Ausbilden der letzten Lage bei einem erfindungsgemäßen Verfahren,
- Fig. 4: der Schritt des Umhüllens bei einem erfindungsgemäßen Verfahren,
- Fig. 5: ein optionaler Schritt eines Drehens bei einem erfindungsgemäßen Verfahren,
- Fig. 6: ein fertiggestellter erfindungsgemäßer Sackstapel in einer ersten Ansicht,
- Fig. 7: der Stapel gemäß Fig. 6 in einer seitlichen Ansicht und
- Fig. 8: eine weitere Ausführungsform eines erfindungsgemäßen Sackstapels.

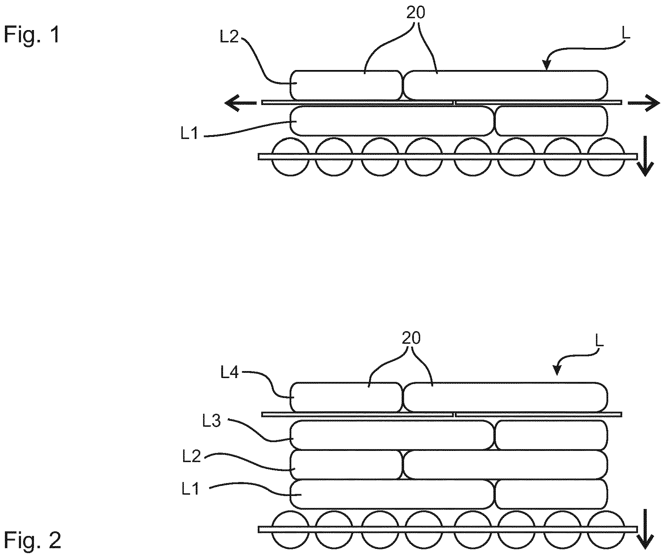

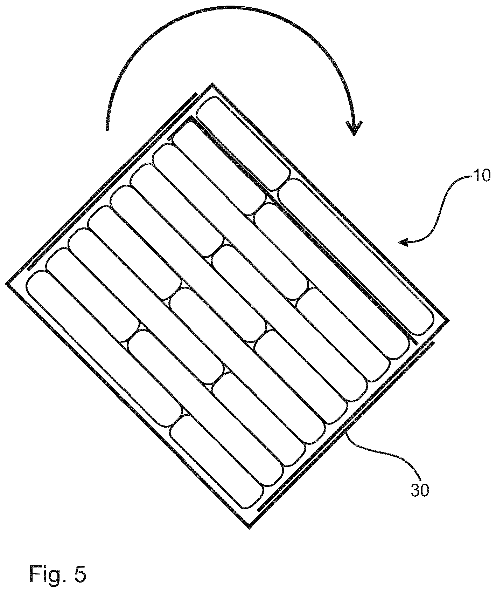

Anhand der Fig. 1 bis 7 kann gut ein erfindungsgemäßes Verfahren erläutert werden. So wird hier eine Hubvorrichtung, welche mit Transportrollen versehen ist, von oben über den Verlauf des Verfahrens entlang der Pfeilrichtung nach unten bewegt. Schematisch ist ebenfalls ein Schiebetisch einer nicht näher erläuterten Schiebevorrichtung gezeigt, welche entlang der beiden Pfeilrichtungen in Fig. 1 eine Öffnungsbewegung durchführen kann. Auf diesem Schiebetisch wird nun eine Lage L von Säcken 20 ausgebildet, welche ein entsprechendes Lagebild aufweist. Durch das Öffnen des Schiebetisches gelangt diese jeweilige Lage L, in Fig. 1 die Lage L2, auf die darunterliegende Lage L1, die sich schon auf der Hubvorrichtung befindet.

Wie den Figuren zu entnehmen ist, ist bei dieser Ausführungsform eine Variation der jeweiligen Lagenbilder vorgesehen. Für eine höhere mechanische Eigenstabilität des herzustellenden Sackstapels 10 führt dies sozusagen zu einem Verschachteln der gefüllten Säcke 20 von Lage L zu Lage L.

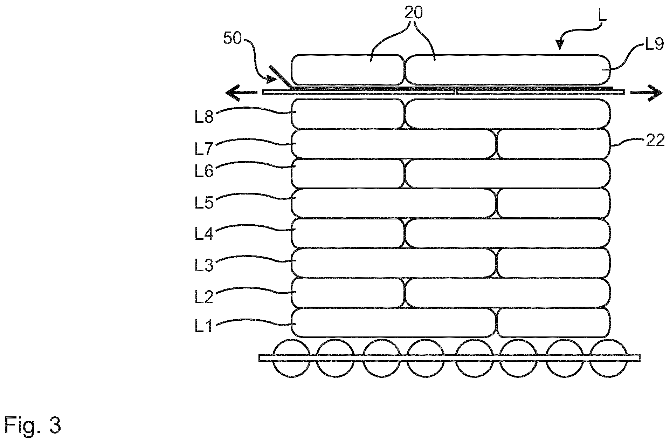

Fig. 2 zeigt die Situation beim Ausbilden der vierten Lage L4 auf die darunterliegenden Lagen L1, L2 und L3. In Fig. 3 wird das Aufbringen der letzten Lage L9 auf die darunterliegende Lage L8 dargestellt. Hier ist gut zu erkennen, dass bereits auf dem Schiebetisch dieser Schiebevorrichtung ein Zwischenboden 50 aufgebracht wurde, welcher sich unterhalb der letzten Lage L9 befindet. Öffnet sich nun der Schiebetisch, gelangt diese oberste Lage L9 zusammen mit dem Zwischenboden 50 auf die zweitoberste Lage L8, welche durch die darunterliegenden Lagen L7, L6, L5, L4, L3, L2 und L1 den gesamten Sackstapel 10 ausbildet.

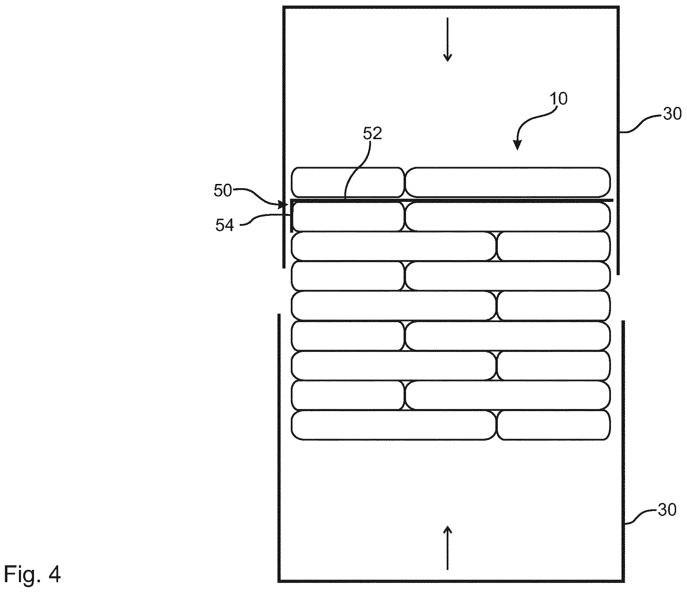

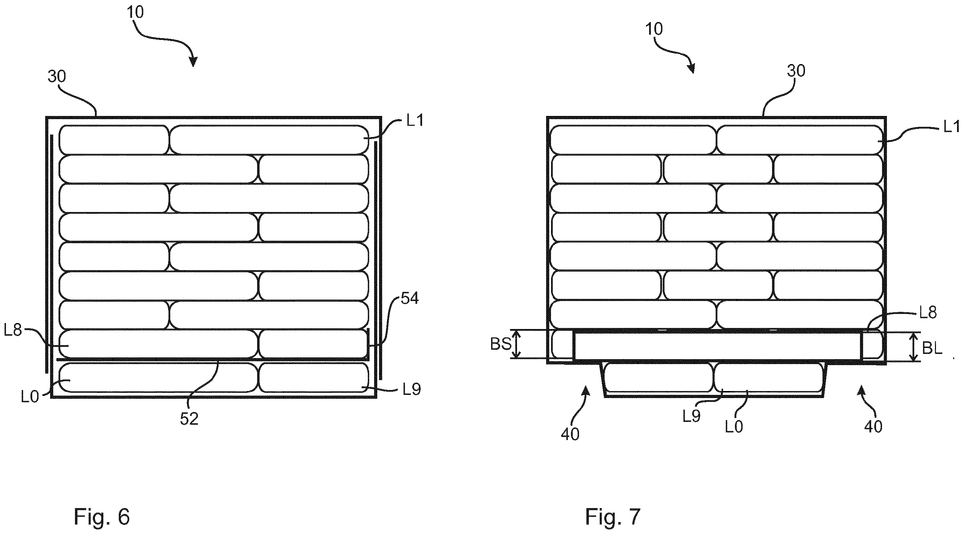

Die Fig. 4 zeigt nun, dass insbesondere von zwei unterschiedlichen Seiten eine Umhüllung 30 aufgebracht werden kann. Durch das Anordnen dieser Umhüllung 30 erfolgt gleichzeitig ein Umklappen der Seitenlasche 54 des Zwischenbodens 50, so dass sich nun gut erkennbar eine Knickkante zwischen der Seitenlasche 54 und der Bodenfläche 52 ausbildet. Bei der Umhüllung 30, welche insbesondere transparent ausgebildet ist, handelt es sich z. B. um eine Schrumpffolie, welche eine entsprechende Umhüllungskraft auf den Sackstapel 10 ausüben kann. Bei der Ausführungsform dieses Verfahrens gemäß der Fig. 1 bis 4 wurden Anhebe-Aussparungen 40, wie sie später in Fig. 7 zu sehen sind, in der letzten Lage L9 ausgebildet. Dementsprechend erfolgt hier ein Rotationsschritt, um aus der obersten und letzten Lage L9 nun die unterste Lage L0 zu machen, wie dies im Ergebnis dieser Rotation die Fig. 6 zeigt. Um die Anhebe-Aussparungen 40 und die entsprechende mechanisch versteifende Funktionalität des Zwischenbodens 50 besser erläutern zu können, zeigt die Fig. 7 die Ansicht der Fig. 6 von der rechten Seite. So sind hier in den beiden Außenseiten Anhebe-Aussparungen 40 vorgesehen, in welche entsprechende Zinken eines Gabelstaplers einfahren können. Heben diese Zinken in den Anhebe-Aussparungen 40 nun den Sackstapel 10 an, so wird diese Anhebekraft in die Lage L8 eingebracht. Die gesamte Gewichtskraft aller darüberliegenden Lagen L1 bis L8 stützt sich also an diesen beiden Außenseiten über die Kontaktflächen der Anhebe-Aussparungen 40 auf den Gabelzinken des Gabelstaplers ab. Die dazwischenliegende Gewichtskraft, welche insbesondere auch die Anordnung des Schwerpunktes beinhaltet, wird über die Knicklinie zwischen der Seitenlasche 54 und der Bodenbleche 52 nach außen geleitet, so dass ein unerwünschtes Durchhängen oder Durchbiegen deutlich reduziert wird. Dabei ist bei dieser Ausführungsform die Breite BL der Seitenlasche 54 ähnlich groß bzw. gleich groß wie die Breite BS der jeweiligen Säcke 20 dieser Lage L8.

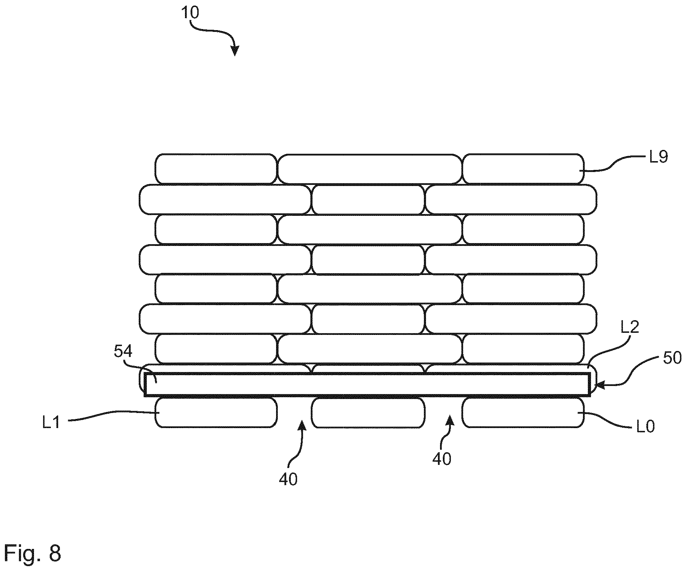

Fig. 8 zeigt eine Variation eines erfindungsgemäßen Sackstapels 10, welche durch gleiche oder ähnliche Verfahrensschritte mit einem erfindungsgemäßen Verfahren hergestellt worden sind. Hier ist in der Seitenansicht gut zu erkennen, dass die Anhebe-Aussparungen 40 nicht zwangsläufig an der Außenseite des Sackstapels 10 ausgebildet werden müssen. Auch ist hier gut zu erkennen, dass die unterste Lage L0 durch die erste Lage L1 ausgebildet wird. Damit muss ein zugehöriger Rotationsschritt nicht mehr durchgeführt werden, sondern kann unterbleiben.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Sackstapel
- 20: gefüllter Sack
- 22: Seitenfläche
- 30: Umhüllung
- 40: Anhebe-Aussparung
- 50: Zwischenboden
- 52: Bodenfläche
- 54: Seitenlasche

- L: Lage
- L1: erste Lage
- L2: zweite Lage
- L3: dritte Lage
- L4: vierte Lage
- L5: fünfte Lage
- L6: sechste Lage
- L7: siebte Lage
- L8: achte Lage
- L9: neunte Lage
- L0: unterste Lage

- BL: Breite der Seitenlasche
- BS: Breite der Säcke

## Patentansprüche

1. Verfahren für das Stapeln von gefüllten Säcken (20) zu einem palettenfreien Sackstapel (10), aufweisend die folgenden Schritte:
- Ausbilden einer ersten Lage (L1) aus zumindest zwei Reihen von gefüllten Säcken (20),
- Ausbilden wenigstens einer weiteren Lage (L2) aus zumindest zwei Reihen von gefüllten Säcken (20) auf der ersten Lage (L1),
- Umhüllen des fertigen Sackstapels (10) mit zumindest einer stabilisierenden Umhüllung (30),
wobei
die erste Lage (L1) oder die letzte Lage (L9) des Sackstapels (10) mit zumindest zwei Anhebe-Aussparungen (40) für ein Anheben mit einem Gabelstapler ausgebildet wird und zwischen zwei Lagen (L8, L9) ein mechanisch versteifender Zwischenboden (50) eingebracht wird,
wobei der Zwischenboden (50) eine Bodenfläche (52), die sich zwischen den beiden benachbarten Lagen (L8, L9) erstreckt, und zumindest einer Seitenlasche (54), welche sich entlang der Seitenflächen (22) der Säcke (20) einer der beiden benachbarten Lagen (L8, L9) und quer zu den Anhebe-Aussparungen (40) erstreckt, umfasst, **dadurch gekennzeichnet, dass** der Zwischenboden (50) wenigstens eines der folgenden Materialen aufweist und/oder wenigstens abschnittsweise aus einem der folgenden Materialen besteht:
- Papier
- Pappe
- Karton
und wobei die Bodenfläche (52) und zumindest eine der Seitenlaschen (54) eine Knicklinie ausbilden.

2. Verfahren nach Anspruch 1,
**dadurch gekennzeichnet, dass**
die Anhebe-Aussparungen (40) in der letzten Lage (L9) des Sackstapels (10) ausgebildet werden und anschließend an den Schritt des Umhüllens der umhüllte Sackstapel (10) umgedreht wird, so dass die letzte Lage (L9) die unterste Lage (L0) des Sackstapels (10) ausbildet.

3. Verfahren nach einem der vorangegangenen Ansprüche,
**dadurch gekennzeichnet, dass**
der Zwischenboden (50) zwischen der Lage (L9) in welcher die Anhebe-Aussparungen (40) ausgebildet werden und der benachbarten Lage (L8) eingebracht wird.

4. Verfahren nach einem der vorangegangenen Ansprüche,
**dadurch gekennzeichnet, dass**
der Zwischenboden (50) zwei Seitenlaschen (54) aufweist, welche sich entlang der Seitenflächen (22) der Säcke (20) auf unterschiedlichen Seiten des Sackstapels (10) quer zu den Anhebe-Aussparungen (40) erstrecken.

5. Verfahren nach einem der vorangegangenen Ansprüche,
**dadurch gekennzeichnet, dass**
die zumindest eine Seitenlasche (54) eine Breite (BL) aufweist, welche der Breite (BS) der Seitenfläche (22) eines gefüllten Sacks (20) entspricht oder im Wesentlichen entspricht.

6. Verfahren nach einem der vorangegangenen Ansprüche,
**dadurch gekennzeichnet, dass**
die zumindest eine Seitenlasche (54) sich entlang der Seitenflächen (22) der Säcke (20) und von den Anhebe-Aussparungen (40) weg erstreckt.

7. Verfahren nach einem der vorangegangenen Ansprüche,
**dadurch gekennzeichnet, dass**
der Zwischenboden (50) folgendes Material aufweist und/oder abschnittsweise aus dem folgenden Material besteht:
- Kunststoff

8. Verfahren nach einem der vorangegangenen Ansprüche,
**dadurch gekennzeichnet, dass**
mit zumindest zwei Umhüllungen (30), insbesondere von unterschiedlichen Seiten, der fertige Sackstapel (10) umhüllt wird.

9. Verfahren nach einem der vorangegangenen Ansprüche,
**dadurch gekennzeichnet, dass**
wenigstens zwei Zwischenböden (50), insbesondere mit gleicher oder im Wesentlichen gleicher Ausgestaltung, zwischen jeweils zwei unterschiedlichen Lagen (L8, L9) des Sackstapels (10) eingebracht werden.

10. Verfahren nach einem der vorangegangenen Ansprüche,
**dadurch gekennzeichnet, dass**
das Einbringen des Zwischenbodens (50) zwischen zwei Schritten der Ausbildung der beiden benachbarten Lagen (L8, L9) der Säcke (20) erfolgt.

11. Sackstapel (10), aufweisend zumindest zwei Lagen (L) mit jeweils wenigstens zwei Reihen gefüllter Säcke (20), wobei die unterste Lage (L9, L0) zumindest zwei Anhebe-Aussparungen (40) für ein Anheben mit einem Gabelstapler aufweist, und wobei zwischen zwei Lagen (L8, L9) ein mechanisch versteifender Zwischenboden (50) angeordnet ist,
wobei der Zwischenboden (50) wenigstens eines der folgenden Materialen aufweist und/oder wenigstens abschnittsweise aus einem der folgenden Materialen besteht:
- Papier
- Pappe
- Karton,
wobei der Zwischenboden (50) eine Bodenfläche (52), die sich zwischen den beiden benachbarten Lagen (L8, L9) erstreckt, und zumindest einer Seitenlasche (54), welche sich entlang der Seitenflächen (22) der Säcke (20) einer der beiden benachbarten Lagen (L8, L9) und quer zu den Anhebe-Aussparungen (40) erstreckt, umfasst, wobei die Bodenfläche (52) und zumindest eine der Seitenlaschen (54) eine Knicklinie ausbilden.

12. Sackstapel (10) nach Anspruch 11,
**dadurch gekennzeichnet, dass**
dieser mittels einem Verfahren mit den Merkmalen eines der Ansprüche 1 bis 10 gestapelt worden ist.

## Claims

1. A method for stacking filled bags (20) to form a pallet-free stack of bags (10), having the following steps:
- formation of a first layer (L1) from at least two rows of filled bags (20),
- formation at least of one further layer (L2) from at least two rows of filled bags (20) on the first layer (L1),
- wrapping of the finished stack of bags (10) with at least one stabilizing wrapping (30),
wherein
the first layer (L1) or the last layer (L9) of the stack of bags (10) is formed with at least two lift-recesses (40) for a lifting with a forklift and a mechanically reinforcing intermediate bottom (50) is introduced between two layers (L8, L9),
wherein the intermediate bottom (50) is a bottom surface (52), which extends between the two adjacent layers (L8, L9), and at least one side flap (54) which extends along the side surfaces (22) of the bags (20) of one of the two adjacent layers (L8, L9) and transversely with respect to the lift-recesses (40), **characterized in that** the intermediate bottom (50) has at least one of the following materials and/or consists at least in sections of one of the following materials:
- paper
- cardboard
- carton
and wherein the bottom surface (52) and at least one of the side flaps (54) form a bending line.

2. A method according to Claim 1,
**characterized in that**
the lift-recesses (40) are formed in the last layer (L9) of the stack of bags (10) and subsequent to the step of the wrapping the wrapped stack of bags (10) is turned over, so that the last layer (L9) forms the lowest layer (L0) of the stack of bags (10).

3. A method according to any one of the preceding claims,
**characterized in that**
the intermediate bottom (50) is introduced between the layer (L9), in which the lift-recesses (40) are formed, and the adjacent layer (L8).

4. A method according to any one of the preceding claims,
**characterized in that**
the intermediate bottom (50) has two side flaps (54), which extend along the side surfaces (22) of the bags (20) on different sides of the stack of bags (10) transversely with respect to the lift-recesses (40).

5. A method according to any one of the preceding claims,
**characterized in that**
the at least one side flap (54) has a width (BL), which corresponds or substantially corresponds to the width (BS) of the side surface (22) of a filled bag (20).

6. A method according to any one of the preceding claims,
**characterized in that**
the at least one side flap (54) extends along the side surfaces (22) of the bags (20) and away from the lift-recesses (40).

7. A method according to any one of the preceding claims,
**characterized in that**
the intermediate bottom (50) has the following material and/or in sections consists of the following material:
- plastic

8. A method according to any one of the preceding claims,
**characterized in that**
the finished stack of bags (10) is wrapped with at least two wrappings (30), in particular from different sides.

9. A method according to any one of the preceding claims,
**characterized in that**
at least two intermediate bottoms (50), in particular with the same or substantially the same design are introduced between in each case two different layers (L8, L9) of the stack of bags (10).

10. A method according to any one of the preceding claims,
**characterized in that**
the introduction of the intermediate bottom (50) occurs between two steps of the formation of the two adjacent layers (L8, L9) of the bags (20).

11. A stack of bags (10), having at least two layers (L) with in each case at least two rows of filled bags (20), wherein the lowest layer (L9, L0) has at least two lift-recesses (40) for a lifting with a forklift and wherein a mechanically reinforced intermediate bottom (50) is arranged between two layers (L8, L9),
wherein the intermediate bottom (50) has at least one of the following materials and/or consists at least in sections of one of the following materials:
- paper
- cardboard
- carton,
wherein the intermediate bottom (50) comprises a bottom surface (52), which extends between the two adjacent layers (L8, L9), and at least one side flap (54), which extends along the side surfaces (22) of the bags (20) of one of the two adjacent layers (L8, L9) and transversely with respect to the lift-recesses (40), wherein the bottom surface (52) and at least one of the side flaps (54) form a bending line.

12. A stack of bags (10) according to Claim 11,
**characterized in that**
said stack of bags has been stacked by means of a method with the features of any one of Claims 1 to 10.

## Revendications

1. Procédé pour l'empilement de sacs remplis (20) en une pile de sacs (10) sans palette comprenant les étapes suivantes :
- formation d'une première couche (L1) constituée d'au moins deux rangées de sacs remplis (20),
- formation d'au moins une autre couche (L2) constituée d'au moins deux rangées de sacs remplis (20) sur la première couche (L1),
- enveloppement de la pile de sacs finie (10) avec au moins une enveloppe stabilisante (30),
la première couche (L1) ou la dernière couche (L9) de la pile de sacs (10) étant formée avec au moins deux évidements de levage (40) pour le levage avec un chariot élévateur et, entre deux couches (L8, L9), est inséré un fond intermédiaire (50) de rigidification mécanique,
le fond intermédiaire (50) comprenant une face de fond (52), qui s'étend entre deux couches adjacentes (L8, L9) et au moins une patte latérale (54), qui s'étend le long des faces latérales (22) des sacs (20) d'une des deux couches adjacentes (L8, L9) et transversalement par rapport aux évidements de levage (40), **caractérisé en ce que** le fond intermédiaire (50) comprend au moins un des matériaux suivants et/ou est constitué, au moins à certains endroits, d'un des matériaux suivants :
- papier,
- carton,
- carton ondulé
et la face de fond (52) et au moins une des pattes latérales (54) forment une ligne de pliage.

2. Procédé selon la revendication 1,
**caractérisé en ce que**
les évidements de levage (40) sont formés dans la dernière couche (L9) de la pile de sacs (10) et la pile de sacs (10) enveloppée est retourné après l'étape d'enveloppement, de façon à ce que la dernière couche (L9) devienne la couche inférieure (L0) de la pile de sacs (10).

3. Procédé selon l'une des revendications précédentes,
**caractérisé en ce que**
le fond intermédiaire (50) est inséré entre la couche (L9), dans laquelle sont formées les évidements de levage (40) et la couche adjacente (L8).

4. Procédé selon l'une des revendications précédentes,
**caractérisé en ce que**
le fond intermédiaire (50) comprend deux pattes latérales (54) qui s'étendent le long des faces latérales (22) des sacs (20) sur différents côtés de la pile de sacs (10) transversalement par rapport aux évidements de levage (40).

5. Procédé selon l'une des revendications précédentes,
**caractérisé en ce que**
l'au moins une patte latérale (54) présente une largeur (BL) qui correspond ou correspond globalement à la largeur (BS) de la face latérale (22) d'un sac rempli (20).

6. Procédé selon l'une des revendications précédentes,
**caractérisé en ce que**
l'au moins une patte latérale (54) s'étend le long des faces latérales (22) des sacs (20) et s'étend en s'éloignant des évidements de levage (40).

7. Procédé selon l'une des revendications précédentes,
**caractérisé en ce que**
le fond intermédiaire (50) comprend le matériau suivant et/ou est constitué, à certains endroits, du matériau suivant :
- matière plastique

8. Procédé selon l'une des revendications précédentes,
**caractérisé en ce que**
avec au moins deux enveloppes (30), plus particulièrement de différents côtés, la pile de sacs finie (10) est enveloppée.

9. Procédé selon l'une des revendications précédentes,
**caractérisé en ce que**
au moins deux fonds intermédiaires (50), plus particulièrement la même conception ou globalement la même conception, sont insérés entre deux couches différentes (L8, L9) de la pile de sacs (10).

10. Procédé selon l'une des revendications précédentes,
**caractérisé en ce que**
une insertion du fond intermédiaire (50) a lieu entre deux étapes de la formation des deux couches adjacentes (L8, L9) des sacs (20).

11. Pile de sacs (10), comprenant au moins deux couches (L) avec chacune au moins deux rangées de sacs remplis (20), la couche inférieure (L9, L0) comprenant au moins deux évidements de levage (40) pour un levage avec un chariot élévateur, et entre deux couches (L8, L9), un fond intermédiaire (50) étant disposé pour une rigidification mécanique,
le fond intermédiaire (50) comprenant au moins un des matériaux suivants et/ou étant constitué, au moins à certains endroits, d'un des matériaux suivants :
- papier
- carton
- carton ondulé,
le fond intermédiaire (50) comprenant une face de fond (52), qui s'étend entre les deux couches adjacentes (L8, L9) et au moins une patte latérale (54) qui s'étend le long des faces latérales (22) des sacs (20) d'une des deux couches adjacentes (L8, L9) et transversalement aux évidements de levage (40), la face de fond (52) et au moins une des pattes latérales (54) formant une ligne de pliage.

12. Pile de sacs (10) selon la revendication 11,
**caractérisée en ce que**
celle-ci a été empilée au moyen d'un procédé avec les caractéristiques d'une des revendications 1 à 10.
